# EUROPÄISCHE PATENTSCHRIFT

(11) **EP 3 438 483 B1**
(45) Veröffentlichungstag und Bekanntmachung des Hinweises auf die Patenterteilung: **03.03.2021**
(21) Anmeldenummer: 18187296.1
(22) Anmeldetag: 03.08.2018
(51) Int. Cl.: F16C 19/50, F16C 19/52, F16C 19/54, F16C 32/04, F16C 39/02, F16C 17/20

(54) **ASYMMETRISCHE SEKUNDÄRLAGER-VORRICHTUNG FÜR EINEN ROTOR EINER MASCHINE**
ASYMMETRIC SECONDARY BEARING DEVICE FOR A ROTOR OF A MACHINE
DISPOSITIF DE PALIER SECONDAIRE ASYMÉTRIQUE POUR UN ROTOR D'UNE MACHINE

(30) Priorität: 04.08.2017 DE 102017117744
(43) Veröffentlichungstag der Anmeldung: 06.02.2019
(73) Patentinhaber: Adaptive Balancing Power GmbH, 64293 Darmstadt (DE)
(72) Erfinder: Schaede, Hendrik, 64285 Darmstadt (DE); Meder, Nicolai, 64293 Darmstadt (DE)
(74) Vertreter: Pfenning, Meinig & Partner mbB

(56) Entgegenhaltungen:
- WO-A1-2017/069395
- DE-A1-102014 214 511
- FR-A- 1 391 619
- JP-A- S56 113 822
- US-A1- 2011 194 669
- US-A1- 2013 077 910
- US-A1- 2014 270 051

## Beschreibung

Die Erfindung betrifft eine Sekundärlager-Vorrichtung für einen Rotor einer Maschine, mit zumindest drei Rollkörpern, welche jeweils in einer vorgegebenen Relativposition relativ zu einer Zentralachse und den anderen Rollkörpern an einem Tragkörper der Sekundärlager-Vorrichtung um eine jeweilige Drehachse drehbar gelagert angeordnet sind.

Sekundärlager, welche auch als Fanglager bezeichnet werden können, übernehmen in Maschinen die Lagerung von Rotoren im Fall einer Überlastung oder eines Ausfalles eines Primärlagers oder bei einem Durchfahren von Resonanzen. Damit kann bei einer Überlastung oder bei einem Ausfall des Primärlagers durch Übernahme der Lagerfunktion durch das Sekundärlager der Rotor weiter sicher betrieben werden oder dieser mit einem minimierten Schaden gestoppt werden. Mit solch einem Sekundärlager wird damit bei einer Überlastung oder einem Ausfall der Primärlagerung ein Anstreifen des Rotors am Stator vermieden oder verringert. Überdies kann der Rotor sicher durch eventuell vorhandene Resonanzen gefahren werden, weiche sonst ein Anstreifen des Rotors am Stator und damit potentiell eine Beschädigung der Maschine zur Folge hätten.

Dies ist gerade bei magnetgelagerten Rotoren kritisch, da dort bei einem durch Überlast oder Ausfall der Magnetlager zustande kommenden Sekundärlagerkontakt durch Reibkräfte angefacht ein Wirbeln des Rotors, ein sogenannter Whirl, auftreten kann, welcher zu großen Schäden an der Maschine führen kann.

Bei Rotoren mit komplexen Geometrien sind nun aufgrund geschlossener Lagerringe bei Wälzlagern Montage oder Austausch von Sekundärlagern mit großem Aufwand verbunden oder sogar unmöglich. Als Primärlager können in solchen Systemen beispielsweise geteilte Lager, sowie hydrodynamische Lager oder Magnetlager zum Einsatz kommen.

Überdies sind gerade bei Außenläuferrotoren mit hohen Oberflächengeschwindigkeiten Wälzlager in Außenläuferkonfiguration für die Verwendung als Sekundärlager ungeeignet, da die aus den hohen Drehzahlen resultierenden Spannungen im rotierenden Lageraußenring zu hoch für einen sicheren Betrieb sind. Somit sind bei Rotoren mit großen Durchmessern oder komplexer Geometrie sowie bei Außenläufern Wälzlager zur Verwendung als Sekundärlager ungünstig.

Bekannte Lösungen wie zum Beispiel aus der US 2014/270051 A1 bekannt, verwenden daher eine planetare Anordnung mehrerer Sekundärlagerelemente um eine Zentralachse, welche über einen Umfang des Rotors verteilt sind. Hierdurch werden Rotoren mit großen Durchmessern ermöglicht, da die Sekundärlagerung von einer Vielzahl kleinerer Lagerelemente übernommen wird. Auch Rotoren mit komplexen Geometrien führen so zu weniger Problemen, da für Montage und Austausch der einzelnen um den Rotor herum angeordneten Lagerelemente nur jeweils die einzelnen Lagerelemente zugänglich sein müssen und eine Demontage des Rotors nicht erforderlich ist. Derartige planetare Anordnungen mehrerer Sekundärlagerelemente, welche beispielsweise mit einem jeweiligen Rollkörper ausgeführt sein können, können nun auch für Außenläuferrotoren mit hohen Umfangsgeschwindigkeiten genutzt werden.

In diesem Zusammenhang offenbart beispielsweise die DE 10 2009 031 887 A1 ein Fanglager zum Auffangen einer Rotorwelle einer Maschine, welches einen um eine virtuelle geometrische Mittenachse umlaufenden ersten Tragkörper sowie Rollkörper aufweist. Die Rollkörper weisen dabei einen jeweiligen Bereich auf, der zwischen der Mittenachse und dem ersten Tragkörper angeordnet ist und sind dabei jeweilig über eine Achse drehbar mit dem ersten Tragkörper verbunden. Dies dient hier dem Reduzieren einer Wahrscheinlichkeit eines Whirls.

Die DE 10 2012 211 860 A1 betrifft eine Strömungsmaschine mit einem Gehäuse und einem relativ zu dem Gehäuse um eine Wellendrehachse drehbar gelagerten Welle. Beabstandet zur Welle sind dabei eine oder mehrere Stützrollen angeordnet, sodass bei einer Verschiebung der Welle eine kraftübertragende Kopplung zwischen der jeweiligen Stützrolle und der Welle erzeugbar ist und sich bei einer Drehung der Welle zumindest die erste Stützrolle um eine zugeordnete erste Drehachse dreht.

Die US 5 752 774 A beschreibt ein Wälzlager für ein zeitweises Lagern eines Rotors, wenn ein Hauptlager ausfällt. Dabei ist eine Vielzahl von Rollen umlaufend um den Rotor angeordnet. Diese Rollen können dabei zwischen unterschiedlichen radialen Positionen bewegt werden, sodass ein unterschiedliches Spiel zwischen den Rollen und dem Rotor eingestellt werden kann.

Die US 2013/0152727 A1 offenbart ein Lagersystem zum sicheren Herunterfahren eines magnetgelagerten Schwungrades, wenn die Magnetlagerung ausfällt.

Weitere Erkenntnisse über Fanglager sind beispielsweise dem Konferenzbeitrag "High Speed Backup Bearings for Outer-Rotor-Type Flywheels - Proposed Testrig Design" von L. Quurck et al., Konferenzbeitrag zur ISMB 2014 in Linz, Österreich, zu entnehmen oder der Dissertation "Rotorabstürze in Wälzlager - Experimentelle Untersuchung des Rotor-Fanglager-Kontakts" von Marlene Helfert an der Technischen Universität Darmstadt, Deutschland, 2009.

Der Erfindung liegt die Aufgabe zugrunde, eine besonders robuste und gegebenenfalls nach einem Primärlagerausfall einfach reparierbare Sekundärlager-Vorrichtung für einen Rotor einer Maschine bereitzustellen.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Die Erfindung betrifft eine Sekundärlager-Vorrichtung für einen Rotor einer Maschine, mit mehreren, zumindest drei, Rollkörpern, welche jeweils in einer vorgegebenen Relativposition relativ zu einer Zentralachse eines Rotorraums, welcher zur Aufnahme des Rotors bestimmt ist, und den anderen Rollkörpern an einem Tragkörper der Sekundärlager-Vorrichtung um eine jeweilige Drehachse drehbar gelagert angeordnet oder angebracht sind. Die Maschine kann insbesondere eine rotierende und/oder elektrische Maschine sein. Die jeweiligen Drehachsen der Rollkörper können hier parallel zu der Zentralachse verlaufen. Insbesondere können die Rollkörper nur genau die eine Drehachse aufweisen. Die Zentralachse kann eine Zentralachse des Rotors bei bestimmungsgemäßer Anordnung des Rotors in der Sekundärlager-Vorrichtung, das heißt bei bestimmungsgemäßem Gebrauch der Maschine sein oder mit dieser Zentralachse zusammenfallen. Dabei rotiert der Rotor bei dem bestimmungsgemäßen Gebrauch der Maschine um die Zentralachse. Die Rollkörper sind bei bestimmungsgemäßer Anordnung des Rotors somit umlaufend um den Rotor angeordnet, um im Falle eines Versagens einer Primärlager-Vorrichtung, in welcher der Rotor bei fehlerfreiem Betrieb der Maschine gelagert ist, eine Sekundär- oder Hilfslagerung bereitzustellen. Dafür kann zwischen den jeweiligen Rollkörpern und dem Rotor, das heißt dem Raum in der Sekundärlager-Vorrichtung, welcher bei bestimmungsgemäßem Gebrauch der Maschine mit dem Rotor von dem Rotor eingenommen ist, ein jeweiliges Spiel vorgesehen sein.

Die Rollkörper können dabei jeweils Teil eines jeweiligen Sekundärlagerelementes sein, welches beispielsweise zusätzlich zu den Rollkörpern noch eine oder mehrere Lager- und/oder Feder- und/oder Dämpfungselemente aufweisen. Die Rollkörper können beispielweise ein auf einer Welle angeordnetes Rad (und die Welle) aufweisen. Die Welle kann über ein oder mehrere, bevorzugt zwei, Lagerelemente wie Lager, bevorzugt Wälzlager, gelagert sein. Die Sekundärlagerelemente können auch als planetare Sekundärlagerelemente bezeichnet werden, da sie nach Art von Planeten um die Zentralachse umlaufend angeordnet sein können.

Wichtig ist hier, dass ein Wert zumindest eines die Anordnung der Rollkörper an dem Tragkörper beschreibenden oder angebenden Parameters für zumindest einen Rollkörper von dem Wert des Parameters für zumindest einen anderen Rollkörper abweicht. Dieser Parameter ist ein Abstand (da-dh) der Rollkörper zu der Zentralachse oder ein zwischen dem Rotor und einer jeweiligen Lauffläche der Rollkörper vorgesehenes Spiel. Zumindest zwei Werte der Parameter sind somit für die Sekundärlager-Vorrichtung voneinander verschieden oder ungleich. Der Parameter kann dabei geometrische Eigenschaften der Anordnung der Rollkörper in ihrer Relativposition zu der Zentralachse und den anderen Rollkörpern beschreiben oder aber auch dynamische Eigenschaften der Anordnung der Rollkörper. Die Sekundärlager-Vorrichtung beziehungsweise die Anordnung der Rollkörper kann also in ihren geometrischen und/oder dynamischen Eigenschaften als asymmetrische oder ungleichmäßige Sekundärlager-Vorrichtung beziehungsweise Anordnung bezeichnet werden. Damit kann eine ungleichmäßige Lagerung für den Rotor realisiert werden. Die Rollkörper können insbesondere auch jeweils eine identische Geometrie aufweisen und/oder baugleich sein. Sind die Rollkörper Teil jeweiliger Sekundärlagerelemente, können die Sekundärlagerelemente dabei insbesondere bis auf die durch den die Anordnung der Rollkörper an dem Tragkörper beschreibenden Parameter beschriebenen Eigenschaften identisch oder baugleich sein. Die durch den Parameter beschriebene Anordnung der Rollkörper kann dabei insbesondere eine Anordnung sein, welche bei bestimmungsgemäßem Gebrauch unveränderlich ist. Die durch den Parameter beschriebene Anordnung kann insbesondere durch die geometrische Gestaltung der Sekundärlager-Vorrichtung unveränderlich vorgegeben sein und somit beispielsweise nicht durch eine Bedienhandlung und/oder Nutzereinstellung flexibel vorgebbar sein. Insbesondere ist der Parameter invariant bezüglich Translation und/oder Rotation der Sekundärlager-Vorrichtung, ist also translationsinvariant und/oder rotationsinvariant.

Das hat den Vorteil, dass das Wirbelverhalten des Rotors im Fehlerfall positiv beeinflusst wird, da für die Ausprägung eines Wirbelns oder "Whirls" ein gleichmäßiges Abrollen des Rotors über seinen Umfang nötig ist. Durch den abweichenden Wert des Parameters zumindest eines Rollkörpers ist nun jedoch zumindest eine Symmetrie in der Sekundärlager-Vorrichtung gebrochen, sodass der Rotor im Fehlerfall der Primärlagerung in der Sekundärlager-Vorrichtung (in geringfügigem Maße) ungleichmäßig gelagert ist. Damit wird das Auftreten eines Wirbelns vermieden oder dessen Ausprägung verringert, sodass eine Beschädigung der Sekundärlager-Vorrichtung und des Rotors vermieden beziehungsweise verringert wird. Damit wird ohne zusätzlichen Materialaufwand eine im Vergleich zum Stand der Technik robustere Sekundärlager-Vorrichtung realisiert, welche auch nach einem Whirl schnell und einfach wieder zu reparieren ist und somit eine Ausfallzeit der Maschine verhindert.

Laut der Erfindung ist vorgesehen, dass der oder einer der Parameter einen Abstand der Rollkörper zu der Zentralachse und/oder ein zwischen dem Rotor und einer jeweiligen Lauffläche der Rollkörper vorgesehenes Spiel umfasst oder ist. Dabei kann der Abstand und/oder das Spiel je durch die Konstruktion bedingt unveränderbar vorgegeben sein. Insbesondere kann der Abstand und/oder das Spiel dabei nicht flexibel durch eine Einstellung an der Sekundärlager-Vorrichtung vorgegeben werden. Vielmehr ist der Abstand und/oder das Spiel bevorzugt durch die Konstruktion der Sekundärlager-Vorrichtung als eindeutiger Wert vorgegeben. Es wird somit durch den Parameter eine Unrundheit der Anordnung der einzelnen um den Rotor oder Rotorplatz angeordneten Rollkörper vorgegeben, welche größer der Fertigungsgenauigkeit ist. Die Rollkörper sind in diesem Fall somit radial ungleichmäßig verteilt.

Das hat den Vorteil, dass ein gleichmäßiges Abrollen des Rotors über die Rollkörper vermieden wird, sodass durch die Unrundheit der Sekundärlager-Vorrichtung das Aufkommen eines Wirbels unterdrückt oder der aufkommende Wirbel in seinem Ausmaß reduziert wird.

In einer weiteren Ausführungsform ist vorgesehen, dass der oder einer der Parameter einen Winkel umfasst oder ist, welcher durch einen Punkt auf der Zentralachse als Scheitelpunkt und jeweils einen Mittelpunkt von Rollkörpern, die nächste Nachbarn sind, vorgegeben oder definiert ist. Der Winkel kann dabei insbesondere ein ebener Winkel sein, welcher senkrecht zur Zentralachse steht, das heißt jeweils in einer Ebene mit der Zentralachse als Normale verläuft. Der Winkel ist dabei insbesondere unveränderbar vorgegeben. Der Winkel kann dabei auch jeweils einem der beiden nächstbenachbarten Rollkörpern zugeordnet werden, sodass der Winkel als Eigenschaft des zugeordneten Rollkörpers betrachtet werden kann. Entsprechend weist dann zumindest einer der Roilkörper einen von den anderen Rollkörpern verschiedenen zugeordneten Winkel auf. Ein Winkelversatz zumindest eines der Rollkörper von einer gleichmäßigen oder gleich verteilten Anordnung der Rollkörper um die Zentralachse herum ist somit größer als hier bestehende Fertigungstoleranzen. Die Rollkörper sind in diesem Fall somit tangential ungleichmäßig verteilt.

Das hat den Vorteil, dass durch den Winkelversatz bei dem Abrollen des Rotors auf mehrere Rollkörper eine über eine Bewegung über den gesamten Umfang betrachtet ungleichförmige dynamische Anregung des Rotors erfolgt, sodass die Aufprägung einer höherharmonischen Anregung, welche durch die Anzahl der Rollkörper vorgegeben ist, nicht stattfindet. Dies trägt ebenfalls zu einer verminderten Ausprägung eines Wirbels bei und beeinflusst diese Ausprägung somit positiv.

In einer weiteren vorteilhaften Ausführungsform ist vorgesehen, dass zumindest einer der Rollkörper, insbesondere die Rollkörper, jeweils über ein Federelement mechanisch mit dem Tragkörper gekoppelt oder an diesem angeordnet ist beziehungsweise sind und der oder einer der Parameter eine Steifigkeit des Federelements, insbesondere eine vorgebbare Steifigkeit des Federelements, umfasst oder ist.

Das hat den Vorteil, dass durch die Abstimmung der Steifigkeit oder Steifigkeiten eine Beeinflussung des Verhaltens des Rotors bei einem Kontakt mit einem oder mehreren der Rollkörper der Sekundärlager-Vorrichtung, kurz bei einem Kontakt mit der Sekundärlager-Vorrichtung, beeinflusst werden kann. Auch damit kann das Wirbelverhalten positiv beeinflusst werden, da der Rotor erneut nicht gleichmäßig über den gesamten Umfang abrollen kann. Dies gilt hier sowohl bei einer horizontalen als auch bei einer vertikalen Anordnung des Rotors und somit der Zentralachse. Bei horizontalen Rotoren ermöglicht die Anpassung der Steifigkeit zusätzlich die definierte, das heißt planmäßige Aufnahme von beispielsweise Gravitationskräften auf den Rotor.

In einer anderen bevorzugten Ausführungsform ist vorgesehen, dass zumindest einer der Rollkörper, insbesondere die Rollkörper, jeweils über ein Dämpfungselement mechanisch mit dem Tragkörper gekoppelt oder an diesem angeordnet ist beziehungsweise sind und der oder einer der Parameter eine Dämpfung des Dämpfungselementes, insbesondere eine vorgebbare Dämpfung des Dämpfungselementes, umfasst oder ist.

Auch die Abstimmung der Dämpfung auf die Eigenschaften des Rotors ermöglicht eine Beeinflussung des Verhaltens des Rotors bei einem Kontakt mit dem Sekundärlager. Wieder ist auch hier die Unterdrückung des Wirbeins, das heißt positive Beeinflussung des Wirbelverhaltens von besonderer Bedeutung. Durch die unterschiedliche Dämpfung wird erneut ein gleichförmiges Abrollen über den gesamten Umfang des Rotors in dem Rotorraum vermieden und somit das Wirbelverhalten positiv beeinflusst.

In einer weiteren Ausführungsform ist vorgesehen, dass die Rollkörper jeweils mit zumindest einem Lagerelement, bevorzugt zwei Lagerelementen, drehbar gelagert an oder in einem Kartuschenelement angebracht oder befestigt sind, und das Kartuschenelement jeweils an dem Tragkörper angeordnet oder befestigt ist. Beispielsweise kann das Kartuschenelement mit dem Tragkörper, insbesondere dem Stator, verschraubt werden. Das Kartuschenelement kann dabei den Rollkörper bereichsweise umgreifen. Insbesondere kann das oder die Lagerelemente in einem Kartuschen-Innenraum des Kartuschenelements angeordnet sein. Das Kartuschenelement mit Lagerelement(en) und Rollkörper kann jeweils Teil des eingangs erwähnten jeweiligen Sekundärlagerelementes sein.

Das hat den Vorteil, dass die Fertigung der Sekundärlager-Vorrichtungung, insbesondere die Montage und auch der Austausch der Rollkörper bzw. der Sekundärlagerelemente vereinfacht wird. So entfällt der bei der Einbringung von Sekundär- oder Fanglagerlementen in Bohrungen in einem Stator übliche Aufwand, da bei einem einseitig gelagerte Rollkörper die Lagerelemente nicht in den Stator als Tragkörper eingefädelt werden müssen und überdies der für das Einfädeln benötigte Leerraum im Tragkörper nicht erforderlich ist. Bei einem beidseitig gelagerten Rollkörper wiederum entfällt das aufwändige Positionieren der jeweiligen Lagerelemente in dem Stator, weiches für exakt fluchtende Lagerelemente erforderlich ist. Auch kann so auf einfache Weise eine Modularisierung umgesetzt werden, bei welcher Kartuschenelemente mit unterschiedlichen Eigenschaften, welche jeweils die Anordnung der Rollkörper im Sinne der Erfindung vorgeben, aber einheitlichem Außenmaß genutzt werden können, um baugleiche Tragkörper mit unterschiedlichen Anordnungen von Rollkörpern zu versehen. Da die Rollkörper außerhalb des Stators besser zugänglich und mit höherer Präzision in die Kartuschenelemente eingebaut werden können, kann das Sekundärlagerelement auch präziser und kompakter gebaut werden. Insgesamt wird so Fertigung, Austausch und Wartung erhöht, die Flexibilität erhöht und zudem Bauraum gespart.

Dabei kann insbesondere vorgesehen sein, dass das Kartuschenelement jeweils über ein weiteres Dämpfungselement und/oder ein weiteres Federelement mechanisch mit dem Tragkörper gekoppelt ist und insbesondere der Parameter eine Steifigkeit des weiteren Federelements und/oder eine Dämpfung des weiteren Dämpfungselements umfasst.

Das hat den Vorteil, dass einfache und damit besonders robuste und leicht austauschbare Bauteile für Federelement und/oder Dämpfungselement verwendet werden können, um eine Steifigkeit und/oder Dämpfung in der Sekundärlager-Vorrichtung über die unterschiedlichen Rollkörper hinweg zu variieren. Überdies wird so auch die Montage von Federelement und/oder Dämpfungselement vereinfacht.

In einer besonders vorteilhaften Ausführungsform ist vorgesehen, dass zumindest zwei, insbesondere mehr als zwei und bevorzugt alle, der Werte des Parameters jeweils für einen Rollkörper verschieden von den restlichen Werten des Parameters der restlichen Rollkörper sind. Es unterscheiden sich somit zumindest zwei, insbesondere mehr als zwei und bevorzugt alle Rollkörper in ihren zugehörigen Parameterwerten.

Das hat den Vorteil, dass ein gleichmäßiges Abrollen über den Umfang, wie es für das Aufkommen eines Wirbeins erforderlich ist, besonders zuverlässig vermieden wird.

in einer alternativen Ausführungsform kann hier auch vorgesehen sein, dass sich für jeweils einen von mehreren unterschiedlichen Parametern je genau ein Wert eines Rollkörpers von dem Wert der anderen Rollkörper unterscheidet. Es wird somit eine besonders geringfügige und dennoch wirksame Asymmetrie erzielt, bei welcher die Gleichmäßigkeit der Werte für einen Parameter jeweils nur durch einen einzigen Rollkörper gebrochen wird. Gerade dadurch, dass hier mehrere unterschiedliche Parameter ungleichmäßig in der Sekundärlager-Vorrichtung realisiert werden, wird jedoch dennoch das gefährliche gleichmäßige Abrollen des Rotors über den Umfang an den Rollkörpern vermieden.

In einer weiteren, besonders vorteilhaften Ausführungsform, welche auch als von den bisherigen Ausführungsformen unabhängige Ausführungsform betrachtet werden kann, ist vorgesehen, dass die Rollkörper jeweils mit zumindest einem Wälzlager, insbesondere zwei Wälzlagern, an dem Tragelement gelagert sind und eine Welle des jeweiligen Rollkörpers einen Innenring des zumindest einen Wälzlagers bildet. Insbesondere bildet somit die Welle zugleich den Innenring der beiden, das heißt des ersten und des zweiten Wälzlagers. Die Rollkörper können somit eine jeweilige, parallel zur Drehachse des jeweiligen Rollkörpers verlaufende Welle aufweisen, welche dem Lagern des Rollkörpers in zumindest einem Wälzlager, bevorzugt zwei Wälzlagern, dient. Diese Welle kann hier den jeweiligen Innenring des Wälzlagers oder der Wälzlager bilden. Die Rollkörper können also jeweils eine Rolle mit einer Lauffläche und eine Welle aufweisen.

Insbesondere können die Rollkörper einseitig gelagerte Rollkörper sein. Ein einseitig gelagerter Rollkörper weist wie ein zweiseitig gelagerter Rollkörper jeweils eine Lauffläche auf, welche für einen Kontakt mit dem Rotor im Fehlerfall der Primärlager-Vorrichtung vorgesehen ist, sowie eine jeweilige Welle, die in ihrer Haupterstreckungsrichtung parallel zu der Drehachse des Rollkörpers verläuft und welche über die eine Wälzlagervorrichtung mit insbesondere zwei Wälzlagern an dem Tragkörper gehalten ist. Dabei erstreckt sich die Wälzlagervorrichtung bei einseitig gelagerten Rollkörpern nur auf einer Seite des von der Lauffläche umschlossenen Bereiches des Rollkörpers, eines Rades des Rollkörpers. Bei zweiseitig gelagerten Rollkörpern ist die Wälzlagervorrichtung auf beiden Seiten des von der Lauffläche umschlossenen Bereiches des Rollkörpers, eines Rades des Rollkörpers, angeordnet, beispielsweise mit je einem Wälzlager auf jeder der beiden Seiten. Die Lauffläche kann eine Zylindermantelfläche des Rollkörpers mit einem ersten Durchmesser sein. Die Oberfläche der Welle kann eine Zylindermantelfläche mit einem zweiten Durchmesser sein, welcher geringer als der erste Durchmesser ist. Die Welle ist somit bei einseitig gelagerten Rollkörpern nach Art eines Kragbalkens an dem von der Lauffläche umschlossenen Bereich des Rollkörpers, des Rades des Rollkörpers, beispielsweise an einem Boden eines Zylinders, angeordnet. Dabei können jeweils die Welle und der restliche Rollkörper einstückig ausgeführt sein. Dies gilt für einseitig wie auch zweiseitig gelagerte Rollkörper. Die Innenfläche oder die Innenflächen der Laufbahnen des Wälzlagers oder der Wälzlager für die zugeordneten Wälzelemente können Teil der Oberfläche der Welle und damit der Oberfiäche des (einseitig oder zweiseitig gelagerten) Rollkörpers sein. Der (einseitig oder zweiseitig gelagerte) Rollkörper kann also mit Welle, Rad und Innenlagerring des Wälzlagers oder der Wälzlager einstückig ausgeführt sein.

Das hat den Vorteil, dass eine einfachere Montage und entsprechend auch eine einfachere Reparatur der Rollkörper und damit der Sekundärlager-Vorrichtung, beispielsweise nach einer Beschädigung durch einen über die Sekundärlager-Vorrichtung abrollenden Rotor, realisiert sind. Beispielsweise kann hier eine einfache Bohrung mit einer zugehörigen Sicherung wie beispielsweise einem Sprengring für eine Montage der Rollkörper, zum Beispiel ein Einstecken der Rollkörper in die Bohrung, ausreichen. Zusätzlich lässt sich mit einer derartigen Ausgestaltung der Rollkörper auch ein Fertigungsaufwand, gerade ein Fertigungsaufwand mit den oben beschriebenen ungleichmäßigen Anordnungen, einfacher umsetzen, da beispielsweise nur eine jeweilige Bohrung, in welche der einseitig gelagerte Rollkörper eingesetzt werden kann, entsprechend der jeweiligen Vorgaben platziert werden muss.

Durch die Einsparung der sonst als separates Bauteil zu dem Rotationskörper erforderlichen Lagerinnenringe der Wälzlager wird der Fertigungsaufwand nochmals deutlich reduziert und der Rollkörper kann inklusive der entsprechenden Lagerung kleiner gebaut werden, sodass auch der Tragkörper durch kleinere erforderliche Bohrungen in seiner Gesamtstabilität weniger beeinträchtigt wird als bei herkömmlichen Rollkörpern, bei welchen ein Innenlagerring als zusätzliches, von dem Rollkörper separates oder separierbares Bauteil eingesetzt ist. Damit erhöht sich nochmals die Stabilität der Sekundärlager-Vorrichtung.

Überdies werden so über die vereinfachte Geometrie der Welle des Rollkörpers oder der Rollkörper weitere Komponenten eingespart und durch die entsprechende geringere Anzahl an Bauteilen eine erreichbare Genauigkeit in der Fertigung erhöht und somit die Rundlaufeigenschaften der Rollkörper verbessert. Entsprechend kann auch eine gleichbleibende Genauigkeit mit größeren Fertigungstoleranzwerten erreicht werden. Dadurch, dass ein benötigter Lageraußenring einen geringeren Durchmesser hat als bei einer Lagerung mit separaten Lagerinnenringen, benötigt die Lagerung in radialer Richtung weniger Raum. Der Durchmesser der Lagerung ist damit deutlich kleiner als der Durchmesser des Rollkörpers im Bereich der Lauffläche, sodass hier auch die Lauffläche beziehungsweise das Material der Lauffläche oder der Rolle flexibler als bisher an ein jeweils vorgegebenes Einsatzszenario angepasst werden kann. Insbesondere kann der Rollkörper im Bereich der Lauffläche eine Beschichtung aufweisen. Damit kann auch die Lauffläche des Rollkörpers frei gestaltet werden und beispielsweise bei einer mehrteiligen Ausführung die Rolle, also der Bereich des Rollkörpers welcher von der Lauffläche umgeben ist und nicht zu der Welle gehört, unabhängig von der Lagerung ausgetauscht werden.

Die Erfindung betrifft auch eine Maschine mit einem Rotor und mit einem Stator, welche eine Primärlager-Vorrichtung zum Lagern des Rotors aufweist, mit einer Sekundärlager-Vorrichtung nach einer oder mehreren der beschriebenen Ausführungsformen. Dabei ist die Zentralachse insbesondere eine Rotationsachse des Rotors im fehlerfreien Betrieb der Maschine und/oder der Tragkörper Teil des Stators der Maschine.

In einer besonders vorteilhaften Ausführungsform ist hier vorgesehen, dass die Maschine ein Außenläufer ist oder einen Außenläufer aufweist. Unter einem Außenläufer kann hier eine Bauform einer rotierenden elektrischen Maschine verstanden werden, bei welchem der ruhende Teil der Maschine, also der Stator oder ein Teil des Stators, sich in dem Inneren der Maschine befindet und vom bewegen Teil der Maschine, dem Rotor, umschlossen ist.

Hier ist die beschriebene Sekundärlager-Vorrichtung besonders vorteilhaft, da aufgrund des typischerweise großen Durchmessers des Rotors besonders große Geschwindigkeiten am Umfang erreicht werden und eine Beschädigung im Fehlerfall besonders schwerwiegende Schäden nach sich ziehen kann. Gerade die leichte einzelne Austauschbarkeit der Rollkörper ist hier somit beispielsweise im Falle einer Reparatur günstig.

In einer besonders vorteilhaften Ausführungsform ist vorgesehen, dass die Maschine eine Maschine zur Schwungradspeicherung, das heißt zur Energiespeicherung als Rotationsenergie eines Schwungrads, ist und der Rotor das Schwungrad.

Hier ist die beschriebene Sekundärlager-Vorrichtung besonders vorteilhaft, da naturbedingt im Fehlerfall der Primärlagerung durch ein Schwungrad besonders große Energien freigesetzt werden können und somit beispielsweise bei einem Wirbeln des Rotors große Energien absorbiert werden können, wobei die Maschine und die Rollkörper unter Umständen stark beschädigt werden. Zugleich ist die Verfügbarkeit und somit eine geringe Ausfallzeit bei Energiespeichersystemen besonders wünschenswert.

Ausführungsbeispiele der Erfindung werden nachfolgend anhand schematischer Zeichnungen näher erläutert.

Im Folgenden sind Ausführungsbeispiele der Erfindung beschrieben. Hierzu zeigt:
- Fig. 1: eine bespielhafte erste Ausführungsform einer Sekundärlager-Vorrichtung mit einer vorliegend als Innenläufer ausgeführten Maschine;
- Fig. 2: eine weitere beispielhafte Ausführungsform einer Sekundärlager-Vorrichtung mit einer vorliegend als Außenläufer ausgeführten Maschine;
- Fig. 3: eine beispielhafte Ausführungsform eines beidseitig gelagerten Rollkörpers, wie er aus dem Stand der Technik bekannt ist;
- Fig.4: eine beispielhafte Ausführungsform eines einseitig gelagerten Rollkörpers, wie er ebenfalls aus dem Stand der Technik bekannt ist;
- Fig. 5: eine beispielhafte Ausführungsform eines einseitig gelagerten Rollkörpers mit einer vorgebbaren Dämpfung und einer vorgebbaren Steifigkeit der Lagerung;
- Fig. 6: eine weitere beispielhafte Ausführungsform eines einseitig gelagerten Rollkörpers, dessen Welle einen Innenring für zumindest ein Wälzlager bildet;
- Fig. 7: eine beispielhafte Ausführungsform eines Sekundärlagerelements mit einem Kartuschenelement; und
- Fig.8: eine weitere beispielhafte Ausführungsform eines Sekundärlagerelements mit einem Kartuschenelement.

In den Figuren werden gleiche oder funktionsgleiche Elemente mit den gleichen Bezugszeichen versehen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

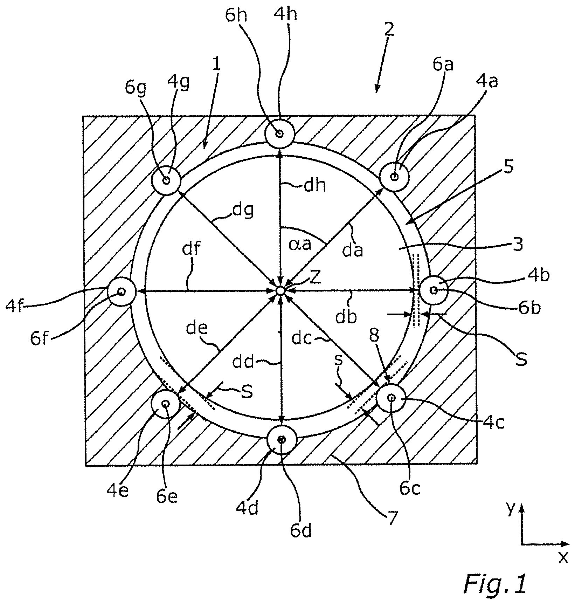

In Figur 1 ist eine schematische Darstellung einer Sekundärlager-Vorrichtung 1, welche vorliegend in einer als Innenläufer ausgeführten Maschine 2 integriert ist, in einer Schnittdarstellung senkrecht zu einer Zentralachse Z eines für einen Rotor 3 vorgesehenen Rotorraums 5 der Maschine 2 dargestellt. Da vorliegend auch der Rotor 3 der Maschine 2 in dem Rotorraum 5 angeordnet ist, ist die Zentralachse Z des Rotorraums 5 im dargestellten fehlerfreien Betrieb der Maschine 2 auch die Zentralachse Z des Rotors 3.

Die Sekundärlager-Vorrichtung 1 weist dabei zumindest drei, vorliegend acht Rollkörper 4a bis 4h auf, welche umlaufend um die Zentralachse Z und somit umlaufend um den Rotor 3 und damit den Rotorraum 5 angeordnet sind. Jeder der Rollkörper 4a bis 4h weist dabei eine jeweilige Drehachse 6a bis 6h auf, um welche die Rollkörper 4a bis 4h drehbar sind. Die Drehachsen 6a bis 6h verlaufen vorliegend parallel zur Zentralachse Z. Die Rollkörper 4a bis 4h sind dabei an einem Tragkörper 7, der vorliegend auch zu einem Stator der Maschine 2 gehörig ist, also Teil des Stators ist, angeordnet.

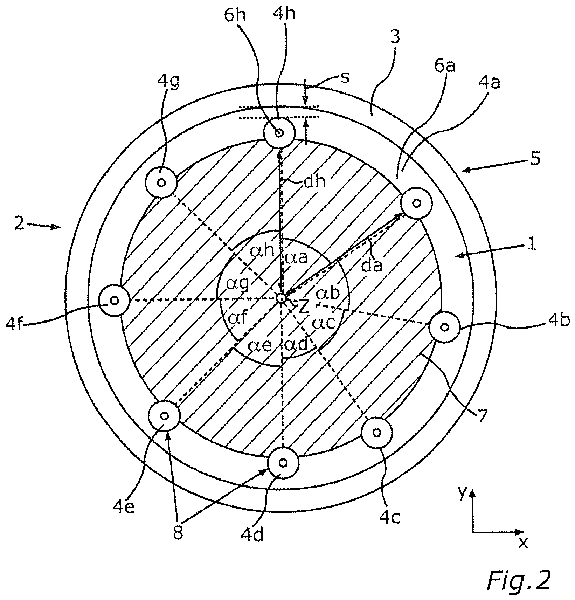

Im gezeigten Beispiel sind die Rollkörper 4a bis 4h dabei in der Schnittebene, der x-y-Ebene, gleichverteilt umlaufend um die Zentralachse Z angeordnet, sodass jeweilige Winkel αa bis αh (Fig. 2) zwischen den Rollkörpern, von denen vorliegend aus Gründen der Übersichtlichkeit nur der Winkel αa zwischen dem ersten Rollkörper 4a und dem achten Rollkörper 4h eingezeichnet ist, für alle Rollkörper 4a bis 4h gleich sind. Der Winkel ist als Parameter, welcher die Anordnung der Rollkörper 4a bis 4h an dem Tragkörper 7 beschreibt, ist somit im gezeigten Beispiel im Gegensatz zu dem in Fig. 2 gezeigten Beispiel für alle Rollkörper 4a bis 4h gleich. Der Winkel wird dabei vorliegend mit der Zentralachse Z als Scheitelpunkt in der x-y-Ebene senkrecht zu Zentralachse Z gemessen, dessen Schenkel beispielsweise durch die jeweiligen Drehachsen 6a bis 6h verlaufen.

Der Parameter dessen Wert die Anordnung der Rollkörper 4a bis 4h an dem Tragkörper 7 beschreibt, und für welchen ein Wert eines der Rollkörper 4a bis 4h von dem entsprechenden Wert zumindest eines anderen Rollkörpers 4a bis 4h abweicht, ist der Abstand da bis dh zwischen den Rollkörpern 4a bis 4h und der Zentralachse Z. Der Übersichtlichkeit halber sind hier die beiden Abstände db und dc zwischen der Zentralachse Z und den beiden Rollkörpern 5b und 6c nicht eingezeichnet. Im gezeigten Beispiel sind nun die Abstände wie dc, df, dg und dh gleich, die Abstände da und de erhöht, sowie die Abstände dd und db zwischen der Zentralachse Z und den Rollkörpern 4b und 4d verkleinert. Die Rollkörper 4a bis 4h sind somit vorliegend radial ungleichmäßig um die Zentralachse Z angeordnet.

Entsprechend ist ein Spiel s zwischen dem Rotor 3 und einer jeweiligen Lauffläche 8 der Rollkörper 4a bis 4h im gezeigten Beispiel für den zweiten und dritten Rollkörper 4b,4d am geringsten und für den ersten und fünften Rollkörper 4a, 4e am größten. Das Spiel s wird in dem gezeigten fehlerfreien Zustand der Maschine 2 bestimmt, bei welchem eine nicht dargestellte Primärlager-Vorrichtung, beispielsweise eine Magnetlager-Vorrichtung, den Rotor 3 in der für den bestimmungsgemäßen Betrieb vorgesehenen Position hält.

Die genaue Verteilung der jeweiligen Werte des Spiels s für die unterschiedlichen Rollkörper 4a bis 4h ist dabei für den Einzelfall zu bestimmen. Wichtig ist vorliegend, dass das Spiel s für zumindest einen der Rollkörper 4a bis 4h und damit der Abstand da bis dh für einen der Rollkörper 4a bis 4h von zumindest einem entsprechenden Abstand da bis dh beziehungsweise Spiel s eines anderen Rollkörpers 4a bis 4h abweicht. Dadurch weist das gezeigte planetare Fanglagersystem als Sekundärlager-Vorrichtung eine Unrundheit auf, welche das Wirbelverhalten des Rotors 3 bei einem Ausfallen der nicht gezeigten Primärlager-Vorrichtung positiv beeinflusst, das heißt vermindert oder abschwächt, wenn nicht verhindert.

In Fig. 2 ist nun eine weitere beispielhafte Ausführungsform einer Sekundärlager-Vorrichtung 1 dargestellt, welche in diesem Fall zu einer als Außenläufer ausgeführten Maschine 2 zugehörig ist. Wieder verläuft die Schnittebene der gezeigten Schnittdarstellung senkrecht zur Zentralachse Z in der x-y-Ebene.

Der Aufbau der Sekundärlager-Vorrichtung 1 entspricht hier grundsätzlich mit den umlaufend an dem Tragkörper 7 angeordneten Rollkörpern 4a bis 4h wieder dem in Fig. 1 gezeigten Aufbau. In der vorliegenden Ausführungsform ist der jeweilige Winkel aa bis ah zwischen den Rollkörpern 4a bis 4h der Parameter, welcher die Anordnung der Rollkörper 4a bis 4h an dem Tragkörper 7 beschreibt, und dessen Wert für einen Rollkörper 4a bis 4h von dem Wert des Parameters für zumindest einen anderen Rollkörper 4a bis 4h abweicht.

Dabei wird vorliegend der Winkel aa zwischen dem Rollkörper 4h und 4a als zu dem Rollkörper 4a gehörig betrachtet, der Winkel αb zwischen dem Rollkörper 4a und 4b als zu dem Rollkörper 4b zugehörig und so weiter. Die Winkel αa bis ah werden dabei wieder wie in Fig. 1 erläutert an der Zentralachse Z als Scheitelpunkt gemessen. Im gezeigten Beispiel sind nun die Winkel αa bis ac größer als 45°, der Winkel ad kleiner als 45° und die Winkel αi bis ah gleich 45°. Die 45° entsprechen hier einer Gleichverteilung der Rollkörper 4a bis 4h um die Zentralachse Z, da vorliegend wieder acht Rollkörper 4a bis 4h vorhanden sind. Die Rollkörper 4a bis 4h sind im gezeigten Beispiel also tangential ungleichmäßig um die Zentralachse Z angeordnet. Die Rollkörper 4a bis 4h können in einer anderen Ausführungsform auch sowohl wie in Fig. 1 radial ungleichmäßig als auch wie in Fig. 2 gezeigt tangential ungleichmäßig verteilt angeordnet sein.

Auch die tangentiale ungleichmäßige Anordnung führt im Fehlerfall der Primärlager-Vorrichtung zu einem ungleichmäßigen Abrollen des Rotors 3 über mehrere Rollkörper 4a bis 4h. Bei dem Abrollen des Rotors 3 über den gesamten Umfang erfolgt somit eine ungleichförmige dynamische Anregung, welche eine Ausprägung eines Wirbels unterdrückt oder reduziert.

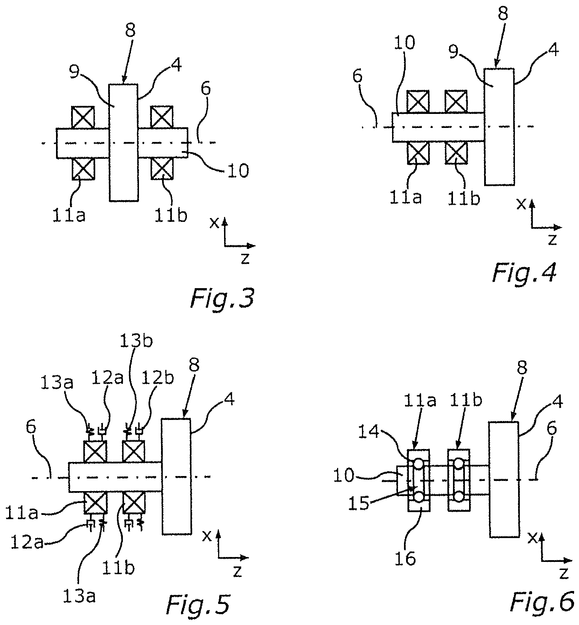

In Fig. 3 ist eine Schnittdarstellung einer beispielhaften Ausführungsform eines Rollkörpers 4 in einer durch die Drehachse 6 des Rollkörpers 4 verlaufenden Schnittebene dargestellt. Der Rollkörper 4 weist dabei einen zylinderförmigen Bereich, ein Rad 9 mit einer Lauffläche 8 auf, welche als Kontaktfläche für den Rotor 3 (Figs. 1) bei einem Ausfall der Primärlager-Vorrichtung vorgesehen ist. Auch weist der Rollkörper 4 eine Welle 10 auf, über welche der Rollkörper 4 mit zumindest einem, vorliegend zwei als Wälzlagern ausgeführten Lagern 11a 11b in dem hier nicht dargestellten Tragkörper 7 (Fig. 1) gelagert ist. Hier und in den im Folgenden beschriebenen Ausführungsformen kann das Rad 9 und die Welle 10 auch einstückig ausgeführt sein.

Die vorliegende, aus dem Stand der Technik bekannt Ausführungsform zeigt nun einen beidseitig gelagerten Rollkörper 4, bei dem sich die Welle 10 in ihrer Haupterstreckungsrichtung in Richtung der Drehachse 6 auf beiden Seiten der Rolle 9 von dieser fort erstreckt und auf beiden Seiten der Rolle 9 zur Lagerung des Rollkörpers 4 in dem Tragkörper 7 ein Lager 11a, 11b, hier ein Wälzlager, vorhanden ist.

Im Gegensatz dazu zeigt Fig. 4 ein einseitig gelagertes Rollelement 4. Wichtig ist dabei, dass sich die Lager 11a, 11b in Richtung der Drehachse 6 nur auf einer Seite des Rades 9 befinden. In der gezeigten Ausführungsform erstreckt sich die Welle 10 in ihrer Haupterstreckungsrichtung dabei parallel zur Drehachse 6 nur auf einer Seite des Rades 9 von diesem fort. Die Welle 10 ist also nach Art eines Tragbalkens ausgeführt, an welchem das Rad 9 des Rollkörpers 4 durch die beiden Lager 11a, 11b gehalten ist und in dem Tragkörper 7 gelagert werden kann.

In Fig. 5 ist nun die in Fig. 4 gezeigte Ausführungsform des Rollkörpers 4 zusätzlich mit jeweiligen Dämpfungselementen 12a, 12b und Federelementen 13a, 13b gelagert, über welche eine Dämpfung und eine Steifigkeit der der Federung der Anordnung des Rollkörpers 4 beziehungsweise der Rollkörper 4a bis 4h (Fig. 1, Fig. 2) eingestellt werden kann. Damit kann beispielsweise individuell für die jeweils in der Sekundäriager-Vorrichtung 2 (Fig. 1, Fig. 2) genutzten Rollkörper 4a bis 4h eine unterschiedliche Steifigkeit und/oder eine unterschiedliche Dämpfung eingestellt werden. Damit nimmt die Steifigkeit und/oder die Dämpfung als Parameter, welcher die Anordnung der Rollkörper 4a bis 4h an dem Tragkörper 7 beschreibt, für zumindest einen Rollkörper 4a bis 4h einen Wert der Federung und/oder Dämpfung ein, welcher für zumindest einen anderen Rollkörper 4a bis 4h abweichend eingestellt ist.

In Fig. 6 ist nun eine weitere Ausführungsform eines einseitig gelagerter Rollkörper 4 in einer Schnittdarstellung durch die Drehachse 6 dargestellt. Dabei ist vorliegend die Welle 10 zugleich als Lagerinnenring für die jeweiligen Lager 11a, 11b, welche auch hier als Wälzlager ausgeführt sind, ausgebildet. Ein jeweiliges Wälzelement 14 läuft somit direkt auf einer von der Welle 10 gebildeten Innenlauffläche 15 für das Wälzelement 14. Hierfür ist vorteilhafterweise auf der Welle 10 eine entsprechende Nut oder Einfräsung vorgesehen, wie dies allgemein von Lagerinnenringen bekannt ist. Gehalten wird der Rollkörper 4 dabei von einem üblichen Lageraußenring 16, welcher eine entsprechende Außenlauffläche für das Wälzelement 14 der entsprechenden Lager 11a, 11b aufweist.

Hierdurch kann eine besonders kompakte Bauweise erreicht werden, bei welcher entsprechende Spiele zwischen Lager 11a, 11b, Tragkörper 7 (Fig. 1) und Welle 10 durch verringerte Fertigungstoleranzen reduziert sind, und auch beispielsweise der Tragkörper 7 (Fig. 1) mehr Materialstärke aufweisen kann und somit der Rollkörper 4 stabiler in dem Tragkörper 7 gehalten ist.

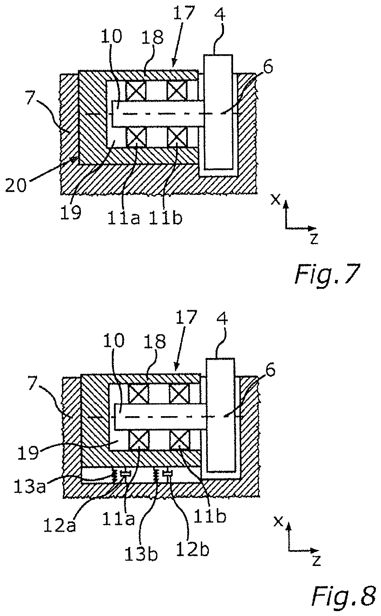

In Fig. 7 ist eine beispielhafte Ausführungsform eines Sekundärlagerelements 17 für die Sekundärlager-Vorrichtung 1 mit einem Kartuschenelement 18 und mit einem einseitig gelagerten Rollkörper 4 in einer Schnittdarstellung durch die Drehachse 6 des Rollkörpers 4 gezeigt. In dem gezeigten Beispiel ist der Rollkörper 4 an seiner Welle 10 mit zwei Lagerelementen oder Lagern 11a, 11b drehbar gelagert an dem Kartuschenelement 18 angebracht. Das Kartuschenelement 18 ist wiederum an dem Tragkörper 7 befestigt. Das Kartuschenelement 18 kann zerstörungsfrei entfernbar an dem Tragkörper 7 befestigt, beispielsweise angeschraubt sein.

In der gezeigten Ausführungsform weist das Kartuschenelement 18 einen an einer Seite offenen Hohlraum 19 auf, der zur Aufnahme der Lager 11a, 11b sowie eines Großteils der Welle 10 bestimmt ist. Die Lager 11a, 11b sowie der Großteil der Welle 10 ist hier also in dem Hohlraum 19 angeordnet. Unter einem Großteil kann vorliegend mehr als 50%, bevorzugt mehr als 80% oder mehr als 90% verstanden werden. Der Hohlraum 19 kann sich zylinderförmig parallel zur Drehachse 6 erstrecken.

Der Tragkörper 7 weist vorliegend eine Aussparung 20 auf, welche zur Aufnahme des Kartuschenelements 18 bestimmt ist. Entsprechend kann die Form der Aussparung 20 an das Kartuschenelement 18 angepasst sein. Insbesondere ist das Kartuschenelement 18 bei bestimmungsgemäßer Anordnung an dem Tragkörper 7 bereichsweise, bevorzugt über einen Großteil einer Außenfläche des Kartuschenelements 18, formschlüssig an dem Tragkörper angeordnet.

In Fig. 8 ist eine weitere beispielhafte Ausführungsform des Sekundärlagerelements 17 für die Sekundärlager-Vorrichtung 1 mit dem Kartuschenelement 18 und mit dem einseitig gelagerten Rollkörper 4 in einer Schnittdarstellung durch die Drehachse 6 des Rollkörpers 4 gezeigt. Das Kartuschenelement 18 ist dabei relativ zu dem Tragkörper 7 in x-Richtung, also senkrecht zur Zentralachse Z (Fig. 1), beweglich an dem Tragkörper 7 angebracht. Dabei sind in x-Richtung zwischen Tragkörper 7 und Kartuschenelement 18 jeweilige Dämpfungselemente 12a, 12b und Federelemente 13a, 13b angeordnet, sodass eine Bewegung des Kartuschenelements 18 und damit des Rollkörpers 4 in x-Richtung durch die Federelemente 13a, 13b gefedert und durch die Dämpfungselemente 12a, 12b gedämpft wird.

## Patentansprüche

1. Sekundärlager-Vorrichtung (1) für einen Rotor (3) einer Maschine (2), mit zumindest drei Rollkörpern (4, 4a-4h), welche jeweils in einer vorgegebenen Relativposition relativ zu einer Zentralachse (Z) und den anderen Rollkörpern (4, 4a-4h) an einem Tragkörper (7) der Sekundärlager-Vorrichtung (1) um eine jeweilige Drehachse (6, 6a-6h) drehbar gelagert angeordnet sind, wobei ein Wert zumindest eines die Anordnung der Rollkörper (4, 4a-4h) an dem Tragkörper (7) beschreibenden Parameters für einen Rollkörper (4, 4a-4h) von dem Wert des Parameters für einen anderen Rollkörper (4, 4a-4h) abweicht,
**dadurch gekennzeichnet, dass**
der Parameter einen Abstand (da-dh) der Rollkörper (4, 4a-4h) zu der Zentralachse (Z) oder ein zwischen dem Rotor (3) und einer jeweiligen Lauffläche der Rollkörper (4, 4a-4h) vorgesehenes Spiel (s) umfasst.

2. Sekundärlager-Vorrichtung (1) nach Anspruch 1,
**dadurch gekennzeichnet, dass**
der Parameter einen Abstand (da-dh) der Rollkörper (4, 4a-4h) zu der Zentralachse (Z) und ein zwischen dem Rotor (3) und einer jeweiligen Lauffläche der Rollkörper (4, 4a-4h) vorgesehenes Spiel (s) umfasst.

3. Sekundärlager-Vorrichtung (1) nach einem der vorhergehenden Ansprüche,
**dadurch gekennzeichnet, dass**
der Parameter einen Winkel (αa-αh) umfasst, welcher durch einen Punkt auf der Zentralachse (Z) als Scheitelpunkt und jeweils einen Mittelpunkt von Rollkörpern (4, 4a-4h) die nächste Nachbarn sind, vorgegeben ist.

4. Sekundärlager-Vorrichtung (1) nach einem der vorhergehenden Ansprüche,
**dadurch gekennzeichnet, dass**
zumindest ein Rollkörper (4, 4a-4h) jeweils über ein Federelement (13a, 13b) mechanisch mit dem Tragkörper (7) gekoppelt ist und der Parameter eine Steifigkeit des Federelements (13a, 13b) umfasst.

5. Sekundärlager-Vorrichtung (1) nach einem der vorhergehenden Ansprüche,
**dadurch gekennzeichnet, dass**
zumindest ein Rollkörper (4, 4a-4h) jeweils über ein Dämpfungselement (12a, 12b) mechanisch mit dem Tragkörper (7) gekoppelt ist und der Parameter eine Dämpfung des Dämpfungselements (12a, 12b) umfasst.

6. Sekundärlager-Vorrichtung (1) nach einem der vorhergehenden Ansprüche,
**dadurch gekennzeichnet, dass**
die Rollkörper (4, 4a-4h) jeweils mit zumindest einem Lagerelement, bevorzugt zwei Lagerelementen, drehbar gelagert an einem Kartuschenelement (18) angebracht sind, und das Kartuschenelement (18) jeweils an dem Tragkörper (7) angeordnet ist.

7. Sekundärlager-Vorrichtung (1) nach Anspruch 6,
**dadurch gekennzeichnet, dass**
das Kartuschenelement (18) jeweils über ein weiteres Dämpfungselement (12a, 12b) und/oder ein weiteres Federelement (13a, 13b) mechanisch mit dem Tragkörper gekoppelt ist und insbesondere der Parameter eine Steifigkeit des weiteren Federelements (13a, 13b) und/oder eine Dämpfung des weiteren Dämpfungselements (12a, 12b) umfasst.

8. Sekundärlager-Vorrichtung (1) nach einem der vorhergehenden Ansprüche,
**dadurch gekennzeichnet, dass**
zumindest zwei, insbesondere mehr als zwei, bevorzugt alle, der Werte des Parameters jeweils von den restlichen Werten des Parameters verschieden sind.

9. Sekundärlager-Vorrichtung (1) nach einem der vorhergehenden Ansprüche,
**dadurch gekennzeichnet, dass**
die Rollkörper (4, 4a-4h) jeweils mit zumindest einem Wälzlager (11a, 11b), insbesondere zwei Wälzlagern (11a, 11b), an dem Tragkörper (7) oder dem Kartuschenelement (18) gelagert sind, und eine Welle (10) des jeweiligen Rollkörpers (4, 4a-4h) einen Innenring des zumindest einen Wälzlagers (11a, 11b) bildet.

10. Maschine (2) mit einem Rotor (3) und einem Stator, die eine Primärlager-Vorrichtung zum Lagern des Rotors (3) aufweist, mit einer Sekundärlager-Vorrichtung (1) nach einem der vorhergehenden Ansprüche, wobei insbesondere die Zentralachse (Z) eine Rotationsachse des Rotors (3) ist und/oder der Tragkörper (7) Teil des Stators der Maschine (2) ist.

11. Maschine (2) nach Anspruch 10,
**dadurch gekennzeichnet, dass**
die Maschine (2) ein Aussenläufer ist.

12. Maschine (2) nach Anspruch 10 oder 11,
**dadurch gekennzeichnet, dass**
die Maschine (2) eine Maschine (2) zur Schwungradspeicherung ist und der Rotor (3) ein Schwungrad.

## Claims

1. A secondary bearing device (1) for a rotor (3) of a machine (2), comprising at least three roller bodies (4, 4a-4h), which are each arranged so as to be supported rotatably about a respective rotational axis (6, 6a-6h), in a predefined relative position relative to a central axis (Z) and the other roller bodies (4, 4a-4h), at a support body (7) of the secondary bearing device (1), a value of at least one parameter for a roller body (4, 4a-4h) describing the arrangement of the roller bodies (4, 4a-4h) at the support body (7) deviating from the value of the parameter for another roller body (4, 4a-4h),
**characterized in that**
the parameter comprises a distance (da-dh) of the roller bodies (4, 4a-4h) from the central axis (Z) or a clearance(s) provided between the rotor (3) and a respective running surface of the roller bodies (4, 4a-4h).

2. The secondary bearing device (1) according to claim 1,
**characterized in that**
the parameter encompasses a distance (da-dh) of the roller bodies (4, 4a-4h) from the central axis (Z) and a clearance(s) provided between the rotor (3) and a respective running surface of the roller bodies (4, 4a-4h).

3. A secondary bearing device (1) according to any one of the preceding claims,
**characterized in that**
the parameter encompasses an angle (αa-αh) that is predefined by a point on the central axis (Z) as an apex, and a respective center of the nearest roller bodies (4, 4a-4h).

4. A secondary bearing device (1) according to any one of the preceding claims,
**characterized in that**
at least one roller body (4, 4a-4h) is mechanically coupled to the support body (7) by way of a respective spring element (13a, 13b), and the parameter encompasses a rigidity of the spring element (13a, 13b).

5. A secondary bearing device (1) according to any one of the preceding claims,
**characterized in that**
at least one roller body (4, 4a-4h) is mechanically coupled to the support body (7) by way of a respective damping element (12a, 12b), and the parameter encompasses a damping of the damping element (12a, 12b).

6. A secondary bearing device (1) according to any one of the preceding claims,
**characterized in that**
the roller bodies (4, 4a-4h) are each attached, so as to be rotatably mountable, at a cartridge element (18) by way of at least one bearing element, and preferably two bearing elements, and the cartridge element (18) is arranged at the respective support body (7).

7. The secondary bearing device (1) according to claim 6,
**characterized in that**
the cartridge element (18) is mechanically coupled to the support body by way of a respective further damping element (12a, 12b) and/or a further spring element (13a, 13b), and, in particular, the parameter encompasses a rigidity of the further spring element (13a, 13b) and/or a damping of the further damping element (12a, 12b).

8. A secondary bearing device (1) according to any one of the preceding claims,
**characterized in that**
at least two, and in particular more than two, preferably all, of the values of the parameter are different from the remaining values of the parameter.

9. A secondary bearing device (1) according to any one of the preceding claims,
**characterized in that**
the roller bodies (4, 4a-4h) are each mounted on the support body (7) or the cartridge element (18) by way of at least one roller bearing (11a, 11b), and in particular two roller bearings (11a, 11b), and a shaft (10) of the respective roller body (4, 4a-4h) forms an inner ring of the at least one roller bearing (11a, 11b).

10. A machine (2), including a rotor (3) and a stator, which includes a primary bearing device for mounting the rotor (3), comprising a secondary bearing device (1) according to any one of the preceding claims, wherein in particular the central axis (Z) is a rotational axis of the rotor (3) and/or the support body (7) is part of the stator of the machine (2).

11. The machine (2) according to claim 10,
**characterized in that**
the machine (2) is an external rotor machine.

12. The machine (2) according to claim 10 or 11,
**characterized in that**
the machine (2) is a machine (2) for flywheel storage, and the rotor (3) is a flywheel.

## Revendications

1. Dispositif de palier secondaire (1) destiné à un rotor (3) d'une machine (2), doté d'au moins trois éléments rotatifs (4, 4a à 4h), lesquels sont disposés en étant respectivement logés rotatifs autour d'un axe de rotation (6, 6a à 6h) respectif dans une position relative prédéfinie par rapport à un axe central (Z) et par rapport aux autres éléments rotatifs (4, 4a à 4h) sur un élément support (7) du dispositif de palier secondaire (1), dans lequel une valeur d'au moins un paramètre, décrivant l'agencement des éléments rotatifs (4, 4a à 4h) sur l'élément support (7) pour un élément rotatif (4, 4a à 4h), diffère de la valeur du paramètre pour un autre élément rotatif (4, 4a à 4h),
**caractérisé en ce que**
le paramètre contient une distance (da à dh) des éléments rotatifs (4, 4a à 4h) par rapport à l'axe central (Z) ou un jeu (s) prévu entre le rotor (3) et une surface de roulement respective des éléments rotatifs (4, 4a à 4h).

2. Dispositif de palier secondaire (1) selon la revendication 1,
**caractérisé en ce que**
le paramètre contient une distance (da à dh) des éléments rotatifs (4, 4a à 4h) vers l'axe central (Z) et un jeu (s) prévu entre le rotor (3) et une surface de roulement respective des éléments rotatifs (4, 4a à 4h).

3. Dispositif de palier secondaire (1) selon l'une des revendications précédentes,
**caractérisé en ce que**
le paramètre contient un angle (aa à ah), lequel est défini par un point sur l'axe central (Z) servant de point culminant et respectivement d'un point central d'éléments rotatifs (4, 4a à 4h), qui sont les voisins les plus proches.

4. Dispositif de palier secondaire (1) selon l'une des revendications précédentes,
**caractérisé en ce que**
un élément rotatif (4, 4a à 4h) est couplé respectivement mécaniquement avec l'élément support (7) par le biais d'un élément ressort (13a, 13b) et le paramètre contient une rigidité de l'élément ressort (13a, 13b).

5. Dispositif de palier secondaire (1) selon l'une des revendications précédentes,
**caractérisé en ce que**
un élément rotatif (4, 4a à 4h) est couplé respectivement mécaniquement avec l'élément support (7) par le biais d'un élément d'amortissement (12a, 12b) et le paramètre contient un amortissement de l'élément d'amortissement (12a, 12b).

6. Dispositif de palier secondaire (1) selon l'une des revendications précédentes,
**caractérisé en ce que**
les éléments rotatifs (4, 4a-4h) sont disposés logés en étant rotatifs sur un élément de type cartouche (18) respectivement avec au moins un élément de roulement, de préférence, deux éléments de roulement, et l'élément de type cartouche (18) est respectivement disposé sur l'élément support (7).

7. Dispositif de palier secondaire (1) selon la revendication 6,
**caractérisé en ce que**
l'élément de type cartouche (18) est couplé respectivement de manière mécanique avec l'élément support par le biais d'un autre élément d'amortissement (12a, 12b) et/ou d'un autre élément ressort (13a, 13b), et en particulier, le paramètre contient une rigidité de l'autre élément ressort (13a, 13b) et/ou un amortissement de l'autre élément d'amortissement (12a, 12b).

8. Dispositif de palier secondaire (1) selon l'une des revendications précédentes,
**caractérisé en ce que**
qu'au moins deux, notamment plus de deux, de préférence toutes, parmi les valeurs du paramètre sont respectivement différentes des valeurs restantes du paramètre.

9. Dispositif de palier secondaire (1) selon l'une des revendications précédentes,
**caractérisé en ce que**
les éléments rotatifs (4, 4a-4h) sont logés sur l'élément support (7) ou sur l'élément de type cartouche (18) respectivement avec au moins un palier à roulement (11a, 11b), notamment deux paliers à roulement (11a, 11b), et un arbre (10) de l'élément rotatif (4, 4a à 4h) respectif forme une bague intérieure de l'au moins un palier à roulement (11a, 11b).

10. Machine (2) dotée d'un rotor (3) et d'un stator, qui présente un dispositif de palier primaire pour le logement du rotor (3), dotée d'un dispositif de palier secondaire (1) selon l'une des revendications précédentes, dans laquelle l'axe central (Z) est notamment un axe de rotation du rotor (3) et/ou l'élément support (7) fait partie du stator de la machine (2).

11. Machine (2) selon la revendication 10,
**caractérisé en ce que**
la machine (2) est d'un rotor extérieur.

12. Machine (2) selon la revendication 10 ou la revendication 11,
**caractérisé en ce que**
la machine (2) est une machine (2) pour un stockage par volant d'inertie et le rotor (3) est un volant d'inertie.
